(19)

Europäisches
Patentamt

European
Patent Office

Office européen
des brevets

(11) **EP 1 862 281 A1**

(12) **EUROPEAN PATENT APPLICATION**
published in accordance with Art. 158(3) EPC

(43) Date of publication:
05.12.2007 Bulletin 2007/49

(51) Int Cl.:
*B29B 15/08* (2006.01)    *C08L 23/26* (2006.01)
*D06M 15/227* (2006.01)    *C08J 5/06* (2006.01)
*D06M 101/40* (2006.01)    *B29K 105/08* (2006.01)

(21) Application number: 06730718.1

(22) Date of filing: 24.03.2006

(86) International application number:
PCT/JP2006/306770

(87) International publication number:
WO 2006/101269 (28.09.2006 Gazette 2006/39)

(84) Designated Contracting States:
DE ES FR GB IT

(30) Priority: 25.03.2005   JP 2005090141
07.06.2005   JP 2005167324
29.07.2005   JP 2005221502

(71) Applicant: Teijin Techno Products Limited
Osaka-shi,
Osaka 541-0054 (JP)

(72) Inventors:
• SHIRAKI, Kouji
mi-cho, Sunto-gun, Shizuoka, 4118720 (JP)

• MURAYAMA, Naomitsu
3-chome, Ibaraki-shi, Osaka, 5670006 (JP)
• MAKINO, Shoji
a-cho, Matsuyama-shi, Ehime, 7918041 (JP)

(74) Representative: Ziebig, Marlene
Anwaltskanzlei
Gulde Hengelhaupt Ziebig & Schneider
Wallstrasse 58/59
10179 Berlin (DE)

(54) **CARBON FIBER STRAND FOR REINFORCING THERMOPLASTIC RESINS AND METHOD OF PRODUCING THE SAME**

(57)     There are disclosed a carbon fiber strand for reinforcement of thermoplastic resin, wherein a sizing agent containing a resin composition obtained by mixing a component [A], i.e. an acid-modified polyolefin copolymer having a weight-average molecular weight of 15,000 to 150,000, which has, as the main chain, an ethylene-propylene copolymer, a propylene-butene copolymer or an ethylene-propylene-butene copolymer and in which the main chain has been modified with 0.1 to 20% by mass of an unsaturated carboxylic acid, and a component [B], i.e. an acid-modified polypropylene having a weight-average molecular weight of 3,000 to 150,000, which has, as the main chain, a polypropylene and in which the main chain has been modified with 0.1 to 20% by mass of an unsaturated carboxylic acid, at a mass ratio of 1:20 to 10:5, is adhered to 100 parts by mass of a carbon fiber in an amount of 0.1 to 8.0 parts by mass; a method for producing the above strand; and a carbon fiber-reinforced thermoplastic resin containing the above strand.

EP 1 862 281 A1

**Description**

Technical Field

The present invention relates to a carbon fiber strand for reinforcement of thermoplastic resin, having excellent adhesivity to thermoplastic resins such as polypropylene and the like; a method for production thereof; and a carbon fiber-reinforced thermoplastic resin reinforced with the strand.

Background Art

Carbon fiber and carbon fiber-reinforced thermoplastic resins produced using the carbon fiber as a reinforcing material (the resins may hereinafter be referred to as composite material) have various superior properties such as high tensile strength and high tensile modulus, excellent heat resistance, excellent chemical resistance, excellent fatigue characteristic and excellent abrasion resistance, small linear expansion coefficient and consequent excellent dimensional stability, excellent electromagnetic wave-shieldability, high X-ray transmittability and the like. Therefore, they are in wide use in applications where the above properties are required, such as sports, leisure, aerospace industry, general industries and the like.

Conventional, carbon fiber-reinforced thermoplastic resins are produced in many cases, using a thermosetting resin such as epoxy resin or the like as the matrix. Recently, however, attention has been paid to a thermoplastic resin as a matrix resin, from the standpoint of recyclability and rapid moldability.

Carbon fiber-reinforced thermoplastic resins using a thermoplastic resin as the matrix are produced by a molding method such as injection molding of compound pellets, injection molding of long fiber pellets, injection-compression molding, extrusion, stamping using a random mat, or the like. In the carbon fiber-reinforced thermoplastic resins produced by such a molding method, the length of carbon fiber is relatively short. Consequently, the mechanical properties (e.g. strength and modulus) of the carbon fiber-reinforced thermoplastic resins produced are greatly influenced by the affinity and adhesivity between the carbon fiber and the thermoplastic resin (matrix).

As the matrix resin used in the carbon fiber-reinforced thermoplastic resin, there can be mentioned, for example, acrylonitrile-butadiene-styrene copolymer (ABS), polyamide (e.g. nylon 6 or nylon 66), polyacetal, polycarbonate, polypropylene, high-density polyethylene, polyethylene terephthalate, polybutylene terephthalate, polyetherimide, polystyrene, polyethersulfone, polyphenylene sulfide, polyetherketone and polyetheretherketone.

Of these thermoplastic resins, polypropylene resin is inexpensive and having superior qualities in moldability, water resistance, chemical resistance (oil resistance and solvent resistance), electrical insulation, etc. Therefore, use of polypropylene resin as a matrix of carbon fiber-reinforced thermoplastic resin is expected to increase strikingly in the future. However, since polypropylene resin is a crystalline resin and moreover has no polar group in the molecule, it has low affinity with carbon fiber. For this reason, conventional, carbon fiber-reinforced thermoplastic resins obtained by reinforcing polypropylene resin with carbon fiber are relatively low in mechanical properties.

Carbon fiber strand is constituted by a large number of ultrafine carbon fibers. Such carbon fiber strand has a small elongation and, when subjected to mechanical friction, etc., tends to generate fluff. To carbon fiber strand is ordinarily added a sizing agent in order to prevent the generation of fluff and improve the collectability of carbon fiber to improve the handleability of carbon fiber and, in producing a carbon fiber-reinforced thermoplastic resin, to improve the affinity of carbon fiber strand with thermoplastic resin (matrix).

As the sizing agent for carbon fiber, many proposals have been made heretofore. For example, in JP-A-2005-48344 is proposed a sizing agent obtained by dispersing, in water, a polyproylene type resin modified with 1 to 20% by mass of an unsaturated dicarboxylic acid and having an intrinsic viscosity of 0.02 to 1.3 dl/g, or a salt thereof.

In JP-A-1990-84566 is proposed a sizing agent composed of an ethylene/propylene copolymer modified with a carboxyl group and/or amino group-introduced, unsaturated dicarboxylic acid, a polypropylene modified with the above acid and a polyethylene modified with the above acid.

However, the acid-modified polypropylene resin, etc. used in these sizing agents, however, are each a solid at normal temperature and highly crystalline. Therefore, the sizing agents have a low effect for prevention of fluffing of carbon fiber strand. Further, a carbon fiber strand to which such a sizing agent has been added, is too high in drape and difficult to wind solidly in a bobbin form to obtain a product package. As a result, there tend to occur such problems as, in transportation of the product package, the carbon fiber strand of package causes slough-off.

For these reasons, it is desired to develop a sizing agent for carbon fiber strand, which has good affinity with thermoplastic resins (e.g. polypropylene resin), is low in fluffing particularly when subjected to fretting, and has appropriate drape.

Disclosure of the Invention

The present invention has been made with attention paid to the above-mentioned problems of prior art. The present invention aims at providing, at low costs, a carbon fiber strand for reinforcement of thermoplastic resin, which has high adhesivity to thermoplastic resin as a matrix, has excellent collectability and excellent fretting resistance, and has a high effect for reinforcement of thermoplastic resin, and a thermoplastic resin reinforced with the carbon fiber strand.

The present inventors made a study. As a result, it was found that a carbon fiber strand to which a sizing agent containing a resin composition obtained by mixing, at a given ratio, a modified polyolefin copolymer and a modified polypropylene both having given structures, has high affinity to thermoplastic resins (e.g. polypropylene), has excellent collectability and excellent fretting resistance, and can be preferably used as a reinforcing agent for thermoplastic resin. The finding has led to the completion of the present invention.

The present invention which has achieved the above aim, is as described below.

[1] A carbon fiber strand for reinforcement of thermoplastic resin, wherein a sizing agent containing a resin composition obtained by mixing the following components [A] and [B]:

[A] an acid-modified polyolefin copolymer having a weight-average molecular weight of 15,000 to 150,000, which has, as the main chain, at least one member selected from an ethylene-propylene copolymer, a propylene-butene copolymer and an ethylene-propylene-butene copolymer and in which the main chain has been modified with 0.1 to 20% by mass of an unsaturated carboxylic acid, and

[B] an acid-modified polypropylene having a weight-average molecular weight of 3,000 to 150,000, which has, as the main chain, a polypropylene and in which the main chain has been modified with 0.1 to 20% by mass of an unsaturated carboxylic acid, at a mass ratio of 1:20 to 10:5, is adhered to 100 parts by mass of a carbon fiber in an amount of 0.1 to 8.0 parts by mass.

[2] A carbon fiber-reinforced thermoplastic resin obtained by adding, to a thermoplastic resin, a carbon fiber strand for reinforcement of thermoplastic resin, set forth in [1], in an amount of 5 to 70% by mass.

[3] A carbon fiber-reinforced thermoplastic resin according to [2], wherein the thermoplastic resin is a polypropylene.

[4] A method for producing a carbon fiber strand for reinforcement of thermoplastic resin, which comprises immersing a carbon fiber strand in an aqueous suspension containing a resin composition set forth in [1] and then heating the resulting carbon fiber strand at a temperature at least equal to the melting point of the resin composition.

[5] A method for producing a carbon fiber strand for reinforcement of thermoplastic resin, which comprises immersing a carbon fiber strand in either one of an aqueous suspension of [A] an acid-modified polyolefin copolymer and an aqueous suspension of [B] an acid-modified polypropylene, drying the resulting carbon fiber strand, immersing the dried carbon fiber strand in the other aqueous suspension, and then heating the carbon fiber strand after immersion in the two aqueous suspensions, at a temperature at least equal to the melting point of the resin composition.

[6] A method for producing a carbon fiber strand for reinforcement of thermoplastic resin, which comprises immersing a carbon fiber strand in an aqueous suspension of [B] an acid-modified polypropylene, drying the resulting carbon fiber strand, heating the dried carbon fiber strand at a temperature at least equal to the melting point of the acid-modified polypropylene, immersing the resulting carbon fiber strand in an aqueous suspension of [A] an acid-modified polyolefin copolymer, drying the resulting carbon fiber strand, and then heating the dried carbon fiber strand at a temperature which is at least equal to the melting point of the acid-modified polyolefin copolymer but lower than the melting point of the acid-modified polypropylene [B].

[7] A method for producing a carbon fiber strand for reinforcement of thermoplastic resin, set forth in any one of [4] to [6], wherein the acid-modified polypropylene [B] has the following properties:

(1) a crystallinity of 50 to 80% as measured by IR spectrometry,
(2) an intrinsic viscosity [η] of 0.05 to 0.7 dl/g,
(3) an acid value of 40 to 100 mg-KOH/g, and
(4) a mass reduction of less than 5% when subjected, by a thermobalance, to temperature elevation from 23°C to 250°C at a rate of 10°C/min in the air.

The carbon fiber strand of the present invention is superior in adhesivity to and affinity with thermoplastic resins such as polyproylene resin and the like and, when subjected to mechanical friction, causes no fluffing at the surface. Further, since having appropriate drape, the carbon fiber strand of the present invention can be wound solidly in a bobbin form and made into a product package.

The carbon fiber strand can be preferably used as a reinforcing material for thermoplastic resin. A carbon fiber-reinforced thermoplastic resin obtained by adding the carbon fiber strand of the present invention to a thermoplastic resin has a strikingly high mechanical strength.

Brief Description of the Drawings

Fig. 1 is a drawing explaining a method for measuring the amount of fluff of carbon fiber strand generated when a carbon fiber strand is subjected to fretting by a stainless steel round rod.
Fig. 2 is a drawing explaining an apparatus used for measurement of drape.
Fig. 3 is a schematic drawing showing a method for examining the adhesion strength between a carbon fiber filament and a polypropylene resin.

1 is a carbon fiber strand; 3 is a stainless steel round rod; 20 is a sample; 22 is a slit; 24 is a sample stand; 26 is a metal plate; 31 is a carbon fiber filament; 32 is an adhesive; 33 is a backing paper; 33a and 33b are each a projected portion; 34 is a micro-droplet; and 35a and 35b are each a blade.

Best Mode for Carrying Out the Invention

The carbon fiber strand of the present invention is obtained by adhering, to a carbon fiber bundle, a sizing agent containing a resin composition obtained by mixing, at a given ratio, a component [A], i.e. an acid-modified polyolefin copolymer and a component [B], i.e. an acid-modified polypropylene resin.
The component [A] is a modified polyolefin copolymer which has, as the main chain, at least one member selected from an ethylene-propylene copolymer, a propylene-butene copolymer and an ethylene-propylene-butene copolymer and in which the main chain has been graft-modified with 0.1 to 20% by mass, based on the total amount of the component [A], of an unsaturated carboxylic acid.
In the main chain of the component [A], the proportion of the propylene constituent unit is preferably 50 to 98 mol %. When the proportion of the propylene constituent unit is less than 50 mol %, the adhesivity between carbon fiber strand and thermoplastic resin matrix tends to be low. When the proportion of the propylene constituent unit is more than 98 mol %, the carbon fiber strand per se tends to be low in flexibility and fluffing preventability.
When the main chain of the component [A] is composed of an ethylene-propylene-butene copolymer, the proportion of the butene constituent unit in the main chain is preferably 0 to 10 mol %.
As the unsaturated carboxylic acid used for graft-modification of the main chain of the component [A], there is preferred an unsaturated carboxylic acid having 3 to 8 carbon atoms. As such an unsaturated carboxylic acid, there can be used unsaturated monocarboxylic acids, unsaturated dicarboxylic acids, and their derivatives such as esters, acid anhydrides and the like. Specifically, there are preferred maleic acid, maleic anhydride, fumaric acid, itaconic acid, acrylic acid, methacrylic acid, methyl methacrylate, etc. Of these, particularly preferred are maleic acid, maleic anhydride, acrylic acid, methacrylic acid and methyl methacrylate.
The amount of unsaturated carboxylic acid grafted to main chain is 0.1 to 20% by mass based on the total amount of the component [A], preferably 1 to 15% by mass, more preferably 2 to 10% by mass. When the amount of graft is less than 0.1% by mass, the adhesivity between carbon fiber strand and thermoplastic resin matrix is low. When the amount of graft is more than 20% by mass, the amount of the propylene constituent unit in the modified polyolefin copolymer [A] is relatively small and, therefore, the adhesivity between carbon fiber strand and polypropylene matrix resin is low. Further, under ordinary reaction conditions, graft-modification with an unsaturated carboxylic acid of an amount of more than 20% by mass is difficult.
As the method for graft-modification of main chain, there are the following methods, for example.
Solution method: this is a method wherein a copolymer to become a main chain is dissolved in an organic solvent (e.g. toluene or xylene), an unsaturated carboxylic acid and an organic peroxide are added to the solution, and the mixture is heated to give rise to graft polymerization.
Melting method: this is a method wherein a copolymer to become a main chain is melted in an autoclave, a kneader and extruder or the like, an unsaturated carboxylic acid and an organic peroxide are added thereto, and the mixture is heated at 120 to 300°C.
The above modification methods are known (JP-A-1990-84566, JP-A-1991-181528).
When the component [A] has carboxyl group derived from an unsaturated carboxylic acid, the carboxyl group may have been neutralized as necessary, in a given proportion. As the basic compound used for the neutralization of carboxyl group, there can be mentioned, for example, alkali metal salts such as sodium hydroxide, potassium hydroxide and the like; alkaline earth metal salts; ammonia; and amines such as monomethylamine, dimethylamine, trimethylamine, triethylamine, diisopropylamine, monoethanolamine, diethanolamine, dimethylethanolamine, morpholine and the like.
The weight-average molecular weight of the component [A] is 15,000 to 150,000, preferably 30,000 to 80,000.

When the weight-average molecular weight is less than 15,000, the adhesivity between carbon fiber and thermoplastic resin is insufficient and it is impossible to obtain a thermoplastic resin sufficiently reinforced with a carbon fiber. Further, the carbon fiber strand per se has insufficient collectability and, in using such a carbon fiber strand for production of carbon fiber-reinforced thermoplastic resin, etc., the workability is inferior.

When the weight-average molecular weight of the component [A] is more than 150,000, it is difficult to suspend the component [A] in water; as a result, production of an aqueous sizing agent (a suspension) is difficult. Even if a suspension is obtainable, the particles in the suspension have large diameters, making them unstable and allowing the sizing agent to be unsuitable for long-term operation.

The analysis of the modified polyolefin or modified propylene contained in the sizing agent can be conducted by known methods, for example, a method of conducting molecular weight fractionation by column fractionation, dissolution fraction or the like and subjecting each fraction obtained to compositional analysis by IR or NMR, and a method of conducting compositional fractionation by crystallization fractionation and subjecting each fraction obtained to GPC (gel permeation chromatography) to determine molecular weights. There can also be used high temperature GPC-FTIR, TREF (temperature rising elution fractionation)-FTIR, CFC (cross fractionation chromatography)-FTIR, etc.

The ethylene-propylene copolymer, propylene-butene copolymer and ethylene-propylene-butene copolymer constituting the main chain of the component [A] are amorphous or low-crystalline polyolefin copolymers. Therefore, when the component [A] is adhered onto the surface of carbon fiber, the resulting film of sizing agent is smooth and flexible. Further, the sizing agent containing the component [A] allows the sizing agent-added carbon fiber strand to have high collectability. Thus, the sizing agent containing the component [A] contributes preferably to prevention of fluffing of carbon fiber strand, prevention of breakage of carbon fiber, and control of drape of carbon fiber strand.

The component [B], i.e. the acid-modified polypropylene resin is a resin which has a polypropylene as the main chain and in which the main chain has been graft-modified with an unsaturated carboxylic acid.

The component [B] is an acid-modified polyproylene resin obtained by graft-modifying a polypropylene as a main chain with 0.1 to 20% by mass, based on the total amount of the component [B], of an unsaturated carboxylic acid.

The unsaturated carboxylic acid used in the graft-modification of the main chain is the same as the unsaturated carboxylic acid used in graft-modification of the component [A]. The preferred amount of unsaturated carboxylic acid grafted to main chain and the method for graft-modification are also the same as in the component [A].

The component [B] has carboxyl group derived from an unsaturated carboxylic acid, and this carboxyl group may have been neutralized as necessary, in a given proportion. As the basic compound used for neutralization of the carboxyl group, the same compounds as in the component [A] can be used.

The weight-average molecular weight of the component [B] (modified polypropylene resin) is 3,000 to 150,000, preferably 30,000 to 70,000. When the weight-average molecular weight is less than 3,000, the adhesivity between carbon fiber and thermoplastic resin is insufficient and it is impossible to obtain a thermoplastic resin sufficiently reinforced with a carbon fiber. Further, the carbon fiber strand per se has insufficient collectability and, in using such a carbon fiber strand for production of carbon fiber-reinforced thermoplastic resin, etc., the workability is inferior.

When the weight-average molecular weight of the component [B] is more than 150,000, it is difficult to suspend the component [B] in water; as a result, production of an aqueous sizing agent (a suspension) is difficult. Even if a suspension is obtainable, the particles in the suspension have large diameters, making them unstable and allowing the sizing agent to be unsuitable for long-term operation.

The component [B], i.e. the acid-modified polypropylene resin is preferred to have the following properties (1) to (4).

(1) A crystallinity of 50 to 80% as measured by IR spectrometry

The acid-modified polypropylene resin is preferred to have a crystallinity of 50 to 80%, preferably 60 to 75% as measured by IR spectrometry. A modified polypropylene resin having a crystallinity of less than 50%, when used as a sizing agent, has low affinity with a thermoplastic resin used as a matrix and the carbon fiber-reinforced thermoplastic resin obtained has an insufficient strength. Meanwhile, when there is used a modified polypropylene resin having a crystallinity of more than 80%, the sizing agent layer derived from the modified polypropylene resin, which is formed on the surface of carbon fiber, is fragile. As a result, the sizing agent shows a low effect for prevention of fluffing of carbon fiber strand.

The measurement of crystallinity by IR is conducted by calculating a ratio of absorbances at 998 $cm^{-1}$ and 973 $cm^{-1}$ which are each called a crystal band.

(2) An intrinsic viscosity [η] of 0.05 to 0.7 dl/g

The intrinsic viscosity [η] of the modified polypropylene resin is preferably 0.05 to 0.7 dl/g, more preferably 0.2 to 0.5 dl/g. When a carbon fiber strand containing a modified polypropylene resin having an intrinsic viscosity [η] of less than 0.05 dl/g is used for production of a carbon fiber-reinforced thermoplastic resin, the amount of decomposition gas generated during high-temperature molding is large. As a result, the adhesivity between carbon fiber and thermoplastic resin matrix is impaired and the environmental condition of molding operation becomes bad. Meanwhile, when the intrinsic viscosity of the modified polypropylene resin is more than 0.7 dl/g, the resin's suspension in water is difficult and, even if the suspension is possible, the suspension obtained is unstable.

Incidentally, the intrinsic viscosity [η] is a value measured at 135°C in decalin based on JIS K 7367-3.

(3) An acid value of 40 to 100 mg-KOH/g

The acid value of the modified polypropylene resin is preferably 40 to 100 mg-KOH/g, more preferably 50 to 80 mg-KOH/g. A carbon fiber strand produced using an acid-modified polypropylene resin having an acid value of less than 40 mg-KOH/g, when kneaded with a matrix resin, shows insufficient adhesivity to the matrix resin. Meanwhile, in the case of an acid-modified polypropylene resin having an acid value of more than 100 mg-KOH/g, the content of polypropylene unit in polypropylene main chain is relatively low and, as a result, the crystallinity of acid-modified polypropylene resin is low. Consequently, in kneading a carbon fiber strand produced using such an acid-modified polypropylene resin, with a matrix resin, the adhesivity between matrix resin and carbon fiber strand is insufficient. The acid value is a value measured based on JIS K 0070. That is, the acid value is determined by dissolving a modified polypropylene resin in toluene and conducting titration with an ethanol solution of potassium hydroxide in the presence of phenolphthalein.

(4) A mass reduction of less than 5% when subjected to temperature elevation in the air from 23°C to 250°C at 10°C/min

The acid-modified polypropylene resin is preferred to show a mass reduction of less than 5%, preferably 3% or less when subjected to temperature elevation from 23°C to 250°C at 10°C/min in an air environment and measured using a thermobalance. When the mass reduction is 5% or more and when there is used a carbon fiber strand containing such an acid-modified propylene resin for production of a carbon fiber-reinforced thermoplastic resin, a decomposition gas is generated in a large amount during high-temperature molding and the adhesivity between carbon fiber and thermoplastic resin matrix is impaired. Further, the decomposition gas deteriorates the working environment.

In the carbon fiber strand of the present invention, there is adhered, to a carbon fiber, a sizing agent containing a resin composition obtained by mixing the above-mentioned components [A] and [B] at a mass ratio of 1:20 to 10:5, preferably 1:10 to 10:5, more preferably 1:10 to 10:10.

When the proportion of the component [A] is smaller than the above range, the resulting carbon fiber strand tends to cause fluffing easily and its handleability is low. When the proportion of the component [B] is smaller than the above range, the resulting carbon fiber strand has low adhesivity to a thermoplastic resin matrix.

The sizing agent used in the carbon fiber strand of the present invention may contain various additives besides the above-mentioned resin composition. As the additives, there are mentioned, for example, synthetic lubricants such as methyl oleate, dioctyl sebacate and the like; vegetable oils; higher alcohols such as sperm alcohol and the like; and emulsifiers such as polyethylene glycol type nonionic surfactant, sulfonated oil of low sulfonation degree, and the like. The content of these additives is preferably 30% by mass or less, particularly preferably 20% by mass or less based on the sizing agent.

The amount of the resin composition composed of the components [A] and [B], adhered to a carbon fiber strand differs depending upon the molding method of a carbon fiber-reinforced thermoplastic resin to be produced, the application thereof, etc. Generally, the amount is preferably 1 to 5.0 parts by mass, more preferably 1 to 3 parts by mass relative to 100 parts by mass of the carbon fiber strand (containing no sizing agent). When the amount of the resin composition adhered is less than 1 part by mass, the handleability of carbon fiber strand during molding tends to be inferior. Meanwhile, when the amount is more than 5.0 parts by mass, the drape of carbon fiber strand is low, the winding density of carbon fiber strand when wound round a bobbin is low, and there may occur slough-off, etc. during the transportation of carbon fiber strand.

In adhering, to a carbon fiber strand, a resin composition comprising the components [A] and [B] or a sizing agent containing the resin composition, it is preferred to adhere to the carbon fiber strand, the resin composition or the sizing agent in a suspension form wherein the resin composition or the sizing agent is dispersed in water.

An example of the method for producing the carbon fiber strand of the present invention is explained below.

Carbon fiber as raw material

The carbon fiber as a raw material for production of the carbon fiber strand of the present invention can be any carbon fiber of polyacrylonitrile (PAN) type, petroleum or coal pitch type, rayon type, lignin type, etc. PAN type carbon fiber made from PAN is particularly preferred because it is superior in industrial scale productivity and mechanical properties.

PAN type carbon fiber is a filament of about 6 to 8 μm in diameter and is available in the market as a bundle of about 1,000 to 50,000 such filaments.

Carbon fiber strand is produced via about the following four steps.

In the oxidation step, an acrylic fiber is heated in an air environment of 200 to 300°C for ring closure of nitrile group and introduction of oxygen into the acrylic fiber, whereby an infusibilization treatment is conducted for adding high-temperature stability.

In the carbonization step, firing is conducted at high temperatures of 1,000°C or more in an inert gas atmosphere, whereby a carbon fiber having a carbon content of 90% by mass or more is obtained.

In the surface treatment step, an oxygen-containing group is introduced onto the surface of the carbon fiber obtained above, whereby the resulting carbon fiber has higher adhesivity to matrix resin. As the method for surface treatment of carbon fiber, there can be mentioned, for example, chemical solution oxidation or electrolytic oxidation in liquid phase and oxidation in gas phase. Of these surface treatments, electrolytic oxidation in liquid phase is preferred from the stand point of productivity and uniform treatment. As the electrolyte of electrolytic solution used in electrolytic oxidation, there can be mentioned, for example, inorganic acids such as sulfuric acid, nitric acid, hydrochloric acid and the like; inorganic hydroxides such as sodium hydroxide, potassium hydroxide and the like; and inorganic salts such as ammonium sulfate, sodium carbonate, sodium hydrogencarbonate and the like.

As an index indicating the extent of surface treatment, used in conducting the surface treatment of carbon fiber, there is a surface oxygen concentration ratio (O/C) of carbon fiber. The (O/C) can be measured by electron spectroscopy for chemical analysis (ESCA). It is preferred that the electrolytic oxidation is conducted so as to achieve an (O/C) of 0.05 to 0.4.

In the sizing step, a sizing agent is adhered to a carbon fiber strand in order to improve the handleability of carbon fiber strand and enhance the affinity between carbon fiber and matrix resin. In adhering a sizing agent to a carbon fiber, a sizing solution is prepared first.

The sizing solution is an aqueous suspension wherein the component [A] and the component [B] are dispersed in water, and can be produced by, for example, the following method.

The components [A] and [B] are melted with heating and stirring. To the melt is added a basic substance to neutralize unsaturated carboxylic acid-derived carboxyl group and impart ionicity to the resin composition. A surfactant is added to the mixture, followed by stirring until the system becomes uniform. Then, water is added in small portions, whereby an aqueous suspension is obtained by phase reversal.

As the method for adhering a sizing agent to a carbon fiber strand containing no sizing agent, there are a spraying method, a roller immersion method, a roller transfer method, etc. Of these adhesion methods, the roller immersion method is preferred because it is superior in productivity and uniformity. In this method, a carbon fiber strand is passed through immersion rollers provided in a sizing agent; during the passage, opening and squeezing of carbon fiber strand are repeated owing to the action of immersion rollers. By this method, the sizing agent is uniformly impregnated even into the inside of strand.

After the sizing agent has been impregnated between carbon fibers, a drying treatment is conducted for water removal, whereby an intended, sizing agent-adhered carbon fiber strand is obtained. Control of the adhesion amount of sizing agent to carbon fiber is conducted, for example, by control of concentration of sizing agent or control of squeezing of squeezing rollers. Thereafter, the carbon fiber is dried using, for example, hot air, a hot plate, rollers or an infrared heater.

The dried carbon fiber strand is heated until it reaches a temperature at least equal to the melting point of the resin composition adhered to carbon fiber, whereby a thin film of the resin composition adhered to carbon fiber is formed uniformly on the surface of carbon fiber. The time of heating at the temperature at least equal to the melting popint is preferably at least 5 seconds from the moment when the carbon fiber has reached an intended temperature, and less than 5 minutes is sufficient ordinarily.

In the above method for adhesion of sizing agent, a sizing agent containing the component [A] and the component [B] was used, and the component [A] and the component [B] were adhered simultaneously to the carbon fiber. The adhesion method is not restricted to the above method and the following adhesion method is preferred as well.

In this method, two aqueous suspensions were prepared separately, i.e. an aqueous suspension of [A] an acid-modified polyolefin copolymer and an aqueous suspension of [B] an acid-modified polypropylene are adhered to a carbon fiber in order. In this method, first, a carbon fiber strand containing no sizing agent is immersed in either one of the aqueous suspension of [A] an acid-modified polyolefin copolymer and the aqueous suspension of [B] an acid-modified polypropylene, followed by drying. Then, the dried carbon fiber is immersed in the other aqueous suspension. Thereafter, the carbon fiber strand after immersion in the two aqueous suspensions is heated at a temperature at least equal to the melting points of the acid-modified polyolefin copolymer and the acid-modified polypropylene. The time of heating is the same as mentioned above. By this heating operation a carbon fiber strand for reinforcement of thermoplastic resin is obtained, wherein a resin composition (which is a uniform mixture of the components [A] and [B]) is coated on the surface of carbon fiber.

The following method is also preferred for production of carbon fiber strand for reinforcement of thermoplastic resin. In this method, first, a carbon fiber strand containing no sizing agent is immersed in an aqueous suspension of the component [B], i.e. an acid-modified polypropylene and then is dried. Thereafter, the resulting carbon fiber strand is heated at a temperature at least equal to the melting point of the acid-modified polypropylene. The time of heating is the same as mentioned above. As a result, the surface of carbon fiber is covered uniformly with a film of the component [B] (acid-modified polypropylene). The carbon fiber which has been surface-coated by the above operation, is then immersed in an aqueous suspension of the component [A] (acid-modified polyolefin copolymer), followed by drying. Thereafter, the resulting carbon fiber is heated at a temperature which is lower than the melting point of the component [B] (acid-modified polyolefin copolymer) but is at least equal to the melting point of the component [A]. The time of heating is the same as mentioned above. The melting point of the component [B] is higher than the melting point of the component [A]. As a result, there is produced a carbon fiber strand for reinforcement of thermoplastic resin having, on the surface, an inner film of the component [B] and an outer film of the component [A].

The film of the component [A] is very flexible and protects carbon fiber from damage by fretting. The film of the component [B] is slightly fragile but has strikingly high affinity to thermoplastic resin (matrix). As a result, the above-produced carbon fiber strand having double films each composed of a sizing agent, when used for reinforcement of a thermoplastic resin, reinforces the thermoplastic resin highly.

The carbon fiber strand of the present invention is suitable as a reinforcing fiber for thermoplastic resin. As the thermoplastic resin, there can be mentioned, for example, acrylonitrile-butadiene-styrene copolymer (ABS), polyamides (e.g. nylon 6 and nylon 66), polyacetal, polycarbonate, polypropylene, high-density polyethylene, polyethylene terephthalate, polybutylene terephthalate, polyether imide, polystyrene, polyether sulfone, polyphenylene sulfide, polyetherketone and polyetheretherketone. Polypropylene is particularly preferred.

The amount of the carbon fiber strand used for reinforcement of thermoplastic resin differs depending upon, for example, the form of carbon fiber and the molding method and application of carbon fiber-reinforced thermoplastic resin. However, from the standpoint of cost-performance, the amount is preferably 5 to 70% by mass, more preferably 20 to 40% by mass based on the carbon fiber-reinforced thermoplastic resin.

In producing a carbon fiber-reinforced thermoplastic resin (a composite material) using the carbon fiber strand of the present invention, it is preferred that, first, the present carbon fiber strand and a thermoplastic resin to be reinforced therewith are processed into a molding material such as short-fiber compound, long-fiber pellets, random mat, unidirectionally reinforced prepreg or the like. Then, the molding material can be molded by a method such as extrusion, pressing or the like.

Examples

Sizing agent-adhered carbon fiber strands were produced under the conditions shown in the following Examples and Comparative Examples. The properties of these carbon fiber strands containing a sizing agent were measured by the above-mentioned methods or the following methods.

[Method for measurement of amount of adhered resin composition]

(1) About 50 g of a sizing agent-adhered carbon fiber strand was taken and its weight (W1) was measured.
(2) The carbon fiber strand was washed in pure water to remove the emulsifier contained therein.
(3) The resulting carbon fiber strand and toluene (300 ml) were placed in an Erlenmeyer flask with ground stopper and a water-cooling type cooling tube was connected to the flask. The Erlenmeyer flask with ground stopper was placed on a hot plate provided with a magnetic stirrer, and stirring was made for 30 minutes while the toluene was refluxed, to completely dissolve the sizing agent polymer adhered to the carbon fiber of strand.
(4) The carbon fiber was taken out from the toluene solution. The operations of (2) and (3) were repeated two more times with fresh toluene.
(5) The toluene solutions containing the sizing agent polymer were transferred into a rotary evaporator and the toluene was vaporized, followed by measurement of the mass (W2) of the residue obtained.
(6) The dry mass (W3) of the sizing agent-extracted carbon fiber was measured.

The amount of adhered sizing agent and the amount of adhered polyolefin resin were determined from the following formulas (i) and (ii).

$$\text{Amount of adhered sizing agent} = (W1 - W3) \times 100$$

(i)

$$\text{Amount of adhered polyolefin resin} = W2/W3 \times 100$$

(ii)

[Method for measurement of amount of carbon fiber's fluff generated by fretting]

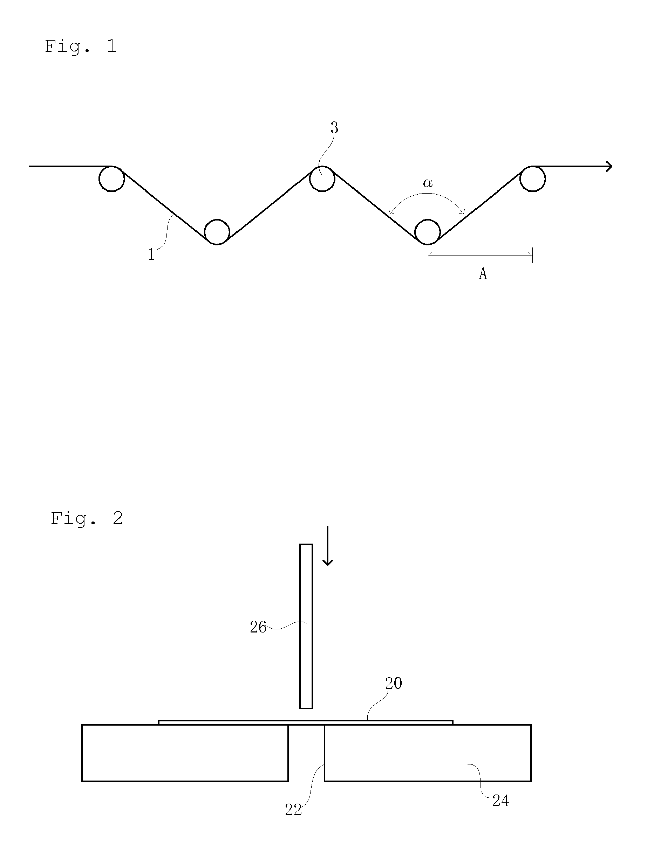

Five, chromium-plated, stainless steel round rods 3 of 2 mm in diameter were arranged zigzag as shown in Fig. 1. They were arranged so that the distance A between adjacent stainless steel round rods 3 was 15 mm and the bending angle $\alpha$ of sizing agent-adhered carbon fiber strand 1 was 120°. A sizing agent-adhered carbon fiber strand 1 was withdrawn from a bobbin and stretched zigzag along the stainless steel round rods. The release tension of the carbon fiber strand withdrawn from the bobbin was set at 1.96 N (200 gf) and the carbon fiber strand was subjected to fretting by the stainless steel round rods.

The carbon fiber strand after fretting was interposed between two urethane sponge sheets (dimension: 32 mm x 64 mm x 10 mm, mass: 0.25 g), and a weight of 125 g was applied on the whole surface of the urethane sponge sheets. Under this conduction, the carbon fiber strand was passed through the urethane sponge sheets for 2 minutes at a speed of 15 m/min. Then, the amount of the fluff adhered to the sponge was measured and taken as the amount of fluff generated by fretting.

[Measurement of drape]

Drape was measured under the following conditions, using Hydrometer Model HOM-2 (a product of Daiei Kagaku Seiki Seisakusho).
Sample for measurement: a carbon fiber strand of 20 cm in length
Slit width: 10 mm
Method for measurement: As shown in Fig. 2, a sample 20 was mounted on a sample stand 24 at an angle normal to the slit of the sample stand. The position of the sample 20 was adjusted so that the center of the sample 20 was above the slit 2. Then, the sample was forced into the slit perpendicularly to a depth of 10 mm at a rate of 10 mm/sec, using a metal plate 26 of 2 mm in thickness and 200 mm in length. The maximum load applied to the metal plate 26 was measured using a load cell (not shown) fitted to the metal plate 26. The measurement was conducted five times using different samples and its average value was taken as measured value (F).
Here, drape is defined by the following formula (iii).

$$\text{Drape [MPa]} = F/(S/10) \qquad \text{(iii)}$$

wherein F is a measured value [gf] given by the Hydrometer and S is a sectional area of carbon fiber strand [mm$^2$].
The sectional area S of carbon fiber strand was calculated by sectional area (s) of carbon fiber filament x number of filaments.

[Winding density of carbon fiber strand package]

A carbon fiber strand was wound round a bobbin to form a package. Using a calipers, there were measured the winding diameter (d1) and winding length (traverse width) (L) of package and the diameter (d2) of bobbin. Next, using a balance, there were measured package mass (W4) and bobbin mass (W5). From these measurements, winding density was calculated using the following formula (iv).

$$\text{Winding density} = (W4 - W5)/\{\pi/4 \times (d1^2 - d2)^2 \times L\}$$

(iv)

[Evaluation of adhesion strength between carbon fiber filament and polypropylene resin]

Adhesion strength was evaluated by a micro-droplet method, using a tester for interfacial property of composite material, produced by Toei Sangyo Co., Ltd.

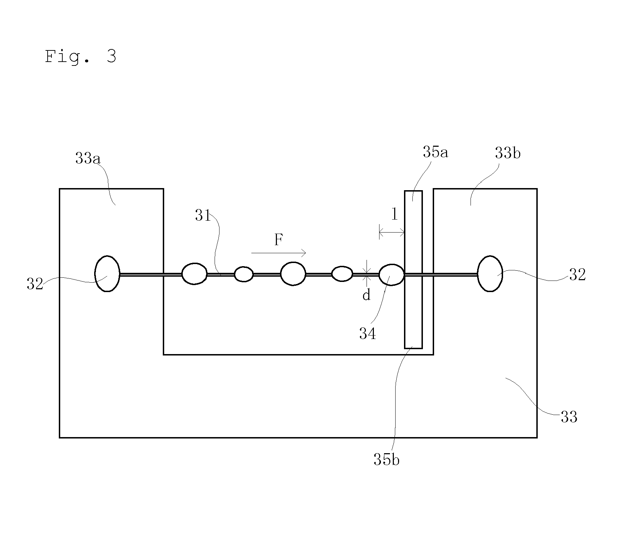

The evaluation method used is as follows. First, a carbon fiber filament was taken out from each of the carbon fiber strands produced in Examples and Comparative Examples. As shown in Fig. 3, the two ends of the carbon fiber filament 31 were fixed to the projected portions 33a and 33b at the two ends of a U-shaped backing paper 33, using an adhesive 32. By this operation, the carbon fiber filament 31 was stretched tightly between the projected portions 33a and 33b of backing paper 33. The backing paper was fixed to the backing paper holder of a tester. The backing paper holder was connected to a sample-moving apparatus provided with a load cell, in such a way that the backing paper 33 could be moved at a given speed to the fiber axis direction of the carbon fiber filament 31.

A polypropylene resin (J-900 GP, a product of Idemitsu petrochemical Company, Limited) heated at 200°C and melted was suspended in the form of liquid droplets from the meshes of a sample container provided in the tester and was allowed to contact with the carbon fiber filament 31 stretched with the backing paper 33. By this operation, there was obtained a sample for measurement comprising the carbon fiber filament 31 and micro-droplets 34 adhered thereto. The micro-droplets 34 were cooled sufficiently at room temperature, after which the carbon fiber filament 31 was held by two SUS-made blades 35a and 35b. Then, the backing paper 33 was moved to the fiber axis direction of the carbon fiber filament 31 at a speed of 0.06 mm/min, whereby the carbon fiber filament 31 was pulled out from the micro-droplets 34 and the maximum load F at pulling-out was measured by the load cell. The measurement was made at an atmosphere temperature of 23°C in a nitrogen atmosphere.

Interfacial shear strength $\tau$ was calculated from the following formula (v) to evaluate the adhesion strength between carbon fiber filament and polypropylene resin.

$$\tau = F/\pi dl \qquad (v)$$

In the formula (iii), F is the maximum load at pulling-out, d is the diameter of carbon fiber filament, and 1 is the particle diameter of micro-droplets in the pulling-out direction.

[Measurement of crystallinity by IR spectrometry]

Using a freeze-grinder (Model JFC 300, a product of Yoshida Seisakusho), a resin to be used as a sizing agent was cooled to -50°C and made into a fine powder. Then, the resin powder and a KBr powder were ground sufficiently in a mortar and mixed uniformly. Thereafter, the mixture was molded into a disc shape using a tablet molder to produce a sample. The thus-obtained sample was measured for IR spectra at an atmosphere temperature of 23°C in a nitrogen atmosphere, using FT-IR (Magna-IR™ spectrometer 550, a product of Nicolet). The density d ($g/cm^3$) of the resin used was determined from the ratio ($A_{998}/A_{973}$) of the absorbance $A_{998}$ of 998 $cm^{-1}$ and the absorbance $A_{973}$ of 973 $cm^{-1}$, using the following formula (iv), and the crystallinity X of the resin was calculated from the following formula.

$$Density\ d = (A_{998}/A_{973} + 9.513)/11.44$$

$$Crystallinity\ X\ (\%) =$$
$$(0.936/d) \times (d-0.850)/(0.936-0.850) \times 100$$

Examples 1 to 16 and Comparative Examples 1 to 7

(1) Preparation of acid-modified polyolefin copolymer resin (component A) suspension

100 g of a main chain [ethylene-propylene copolymer (E-P), propylene-butene copolymer (P-B) or ethylene-propylene-butene copolymer (E-P-B)] shown in Table 1 was mixed with 400 g of toluene. The mixture was heated with stirring, in an autoclave, to obtain a solution. While the autoclave-inside temperature was kept at a temperature at least equal to the melting point of the polyolefin copolymer resin, there were added maleic anhydride, methyl methacrylate and perbutyl I to graft maleic anhydride and methyl methacrylate onto the polyolefin copolymer.

Next, to 25 g of the acid-modified polyolefin copolymer resin obtained were added 100 g of water, a polyoxyethylene alkyl type surfactant, potassium hydroxide and morpholine. The mixture was heated with stirring to completely melt the acid-modified polyolefin copolymer to obtain a suspension of the acid-modified polyolefin copolymer resin.

However, it was impossible to convert the acid-modified polyolefin resin of low grafting degree, of Comparative Example 6 into a suspension.

(2) Preparation of acid-modified polypropylene resin (component B) suspension

100 g of a polypropylene resin was mixed with 400 g of toluene. The mixture was heated with stirring, in an autoclave, to obtain a solution. While the autoclave-inside temperature was kept at a temperature at least equal to the melting point of the polypropylene resin, there were added maleic anhydride, methyl methacrylate and perbutyl I to graft maleic anhydride and methyl methacrylate onto the polypropylene.

Next, to 25 g of the acid-modified polypropylene resin obtained were added 100 g of water, a polyoxyethylene alkyl type surfactant, potassium hydroxide and morpholine. The mixture was heated with stirring to completely melt the acid-modified polypropylene resin to obtain a suspension of the acid-modified polypropylene resin. However, it was impossible to convert the acid-modified polypropylene resin of Comparative Example 7 (the amount of unsaturated carboxylic acid grafted was small) and the acid-modified polypropylene resin of Comparative Example 3 (the molecular weight of polypropylene was large) into respective suspensions.

(3) Production of carbon fiber strand

There were mixed, at a given mixing ratio, the modified polyolefin copolymer resin suspension prepared in (1) and the modified polypropylene resin suspension prepared in (2). The resulting suspension mixture was diluted with pure water so that the concentration of the total resins [the component (A) plus the component (B)] became 25 g/liter.

In the diluted suspension mixture was continuously immersed a carbon fiber strand containing no sizing agent, to impregnate the sizing agent between the filaments of strand. Successively, the strand was passed through a dryer (atmosphere temperature: 140°C) for 3 minutes to evaporate the water contained in the strand, to obtain a sizing agent-adhered carbon fiber strand. Incidentally, the maximum temperature of the carbon fiber strand in the dryer was 120°C.

Then, the carbon fiber strand was heated up to 200°C using a far infrared heater to obtain a carbon fiber strand of the present invention.

The used carbon fiber strand containing no sizing agent was Besfight STS-24K N00 produced by Toho Tenax Co., Ltd. [diameter 7 $\mu$m x 24000 filaments, fineness: 1.6 g/m, tensile strength: 4000 MPa (408 kgf/mm$^2$), tensile modulus: 238 Gpa (24.3 ton/mm$^2$)].

The obtained carbon fiber strand was measured for amount of resin composition adhered, the mass ratio of component A and component B in adhered resin, adhesion strength to polypropylene resin and amount of fluff generated by fretting. The results are shown in Tables 1 and 2, together with the amounts of component A and component B grafted and the molecular weights of component A and component B.

Table 1

| | Component A | | | Component B | | Resin composition | | Adhesion strength (MPa) | Amount of fluff generated by fretting (mg) |
|---|---|---|---|---|---|---|---|---|---|
| | Kind of main chain | Amount of graft (mass %) | Molecular weight | Amount of graft (mass %) | Molecular weight | Amount of adhesion (mass parts) | Mass ratio A/B | | |
| Example 1 | E-P | 5 | 58000 | 5 | 28000 | 1 | 3/7 | 11.7 | 9.2 |
| Example 2 | E-P | 5 | 58000 | 5 | 28000 | 1 | 10/5 | 10.6 | 7.1 |
| Example 3 | E-P | 5 | 58000 | 5 | 28000 | 1 | 1/10 | 13.1 | 10.3 |
| Example 4 | E-P | 3 | 63000 | 5 | 28000 | 1 | 3/7 | 11.1 | 9.0 |
| Example 5 | E-P | 10 | 60000 | 5 | 28000 | 1 | 3/7 | 11.9 | 9.3 |
| Example 6 | E-P | 5 | 58000 | 3 | 30000 | 1 | 3/7 | 10.7 | 9.5 |
| Example 7 | E-P | 5 | 58000 | 8 | 18000 | 1 | 3/7 | 11.9 | 8.9 |
| Example 8 | E-P | 5 | 58000 | 15 | 37000 | 1 | 3/7 | 11.7 | 9.1 |
| Example 9 | E-P | 5 | 20000 | 5 | 28000 | 1 | 3/7 | 11.1 | 9.9 |
| Example 10 | E-P | 5 | 120000 | 5 | 28000 | 1 | 3/7 | 11.4 | 6.8 |
| Example 11 | E-P | 5 | 58000 | 5 | 4500 | 1 | 3/7 | 11.1 | 10.0 |
| Example 12 | E-P | 5 | 58000 | 5 | 50000 | 1 | 3/7 | 11.6 | 9.2 |
| Example 13 | E-P-B | 5 | 62000 | 5 | 28000 | 1 | 3/7 | 10.9 | 9.0 |
| Example 14 | E-P | 5 | 58000 | 5 | 28000 | 0.5 | 3/7 | 11.1 | 10.6 |
| Example 15 | E-P | 5 | 58000 | 5 | 28000 | 3 | 3/7 | 11.9 | 9.0 |
| Example 16 | E-P | 5 | 58000 | 5 | 28000 | 6 | 3/7 | 12.1 | 10.3 |

Table 2

| | Component A | | | Component B | | Resin composition | | Adhesion strength (MPa) | Amount of fluff Generated by fretting (mg) | Remarks |
|---|---|---|---|---|---|---|---|---|---|---|
| | Kind of main chain | Amount of graft (mass %) | Molecular weight | Amount of graft (mass %) | Molecular weight | Amount of adhesion (mass parts) | Mass ratio A/B | | | |
| Comp. Example 1 | E-P | 5 | 58000 | - | - | 1 | 10/0 | 8.0 | 6.3 | |
| Comp. Example 2 | - | - | - | 5 | 28000 | 1 | 0/10 | 13.3 | 15.2 | |
| Comp. Example 3 | E-P | 5 | 58000 | 5 | 150000 | - | - | - | - | Component B was impossible to emulsify. |
| Comp. Example 4 | E-P | 5 | 58000 | 5 | 28000 | 0.08 | 3/7 | 9.7 | 14.7 | |
| Comp. Example 5 | E-P | 5 | 58000 | 5 | 28000 | 8.5 | 3/7 | 12.0 | 10.9 | Winding density was low. |
| Comp. Example 6 | E-P | 0.1 | 58000 | 5 | 28000 | - | 3/7 | - | - | Component A was impossible to emulsify. |
| Comp. Example 7 | E-P | 5 | 58000 | 0.1 | 35000 | - | 3/7 | - | - | Component B was impossible to emulsify. |

The carbon fiber strands obtained in Example 2 and Comparative Example 5 were measured for drape and winding density of carbon fiber strand package. The results are shown in Table 3.

Table 3

|  | Drape (MPa) | Winding density |
|---|---|---|
| Example 1 | 49 | 1.02 |
| Comparative Example 5 | 63 | 0.80 |

Example 17

Using the component [A] (melting point: 70°C) and the component [B] (melting point: 155°C) both used in Example 1, respective suspensions were produced. The obtained suspension of the component [A] was impregnated into a carbon fiber strand, followed by drying. Then, the suspension of the component [B] was adhered to the resulting carbon fiber strand, followed by drying. Thereafter, the carbon fiber strand was heated up to 200°C using a far infrared heater to obtain a carbon fiber strand of the present invention. The amounts of the component [A] and the component [B] adhered, etc. were the same as in Example 1.
Using this carbon fiber strand, the same evaluation tests as in Example 1 were conducted. As a result, the adhesion strength was 11.9 MPa and the amount of fluff generated by fretting was 8.9 mg.

Example 18

Using the component [A] (melting point: 70°C) and the component [B] (melting point: 155°C) both used in Example 1, respective suspensions were produced. The obtained suspension of the component [B] was impregnated into a carbon fiber strand, followed by drying. The resulting carbon fiber strand was heated up to 200°C (this temperature was at least equal to the melting point of the component [B]) and kept at that temperature for 30 seconds. Then, the suspension of the component [A] was adhered to the carbon fiber strand, followed by drying. Thereafter, the carbon fiber strand was heated at 120°C for 30 seconds to obtain a carbon fiber strand of the present invention. The amounts of the component [A] and the component [B] adhered, etc. were the same as in Example.
Using this carbon fiber strand, the same evaluation tests as in Example 1 were conducted. As a result, the adhesion strength was 12.0 MPa and the amount of fluff generated by fretting was 8.8 mg. Examples 19 to 24 (Production Example of component [B])
There were mixed 100 g of a raw material polypropylene having a molecular weight of 15,000 to 300,000 and 400 g of toluene. The mixture was heated with stirring, in an autoclave, to obtain a solution. Thereto was dropwise added an organic peroxide (dicumyl peroxide) with the autoclave-inside temperature kept at a temperature at least equal to the melting point of the resin. The resulting mixture was subjected to a thermal degradation treatment. Next, there were added an unsaturated carboxylic acid (maleic anhydride) and an organic peroxide (perbutyl) to graft the unsaturated carboxylic acid to the polypropylene. After the completion of the reaction, the reaction product was poured into a large amount of methyl ethyl ketone for purification.
Next, 25 g of the modified polypropylene resin obtained was uniformly dissolved in a solvent (toluene). There were placed, in an emulsification vessel, the toluene solution of the modified polypropylene resin and a separately prepared, aqueous surfactant solution, followed by stirring, to obtain a pre-emulsion.
Diethanolamine was added to the pre-emulsion for pH adjustment. The pH-adjusted pre-emulsion was subjected to vacuum distillation for removal of toluene, using a rotary evaporator to finally obtain a suspension of a modified polypropylene resin.
In the suspension was continuously immersed a carbon fiber strand containing no sizing agent (STS-24K N00, a product of Toho Tenax Co., Ltd.), to impregnate the suspension between the filaments. Successively, the suspension-impregnated strand was passed through a dryer (atmosphere temperature: 140°C) for 3 minutes, to evaporate the water to obtain a modified polypropylene resin-adhered, carbon fiber strand. Incidentally, the maximum temperature of the carbon fiber strand in the dryer was 120°C.
The acid value, crystallinity, intrinsic viscosity and mass reduction of the resin adhered to (contained in) the obtained carbon fiber strand are shown in Table 4.

Table 4

| | Acid value (mg-KOH/g) | Crystallinity (%) | Intrinsic viscosity (dl/g) | Mass reduction (%) | Melting point (°C) |
|---|---|---|---|---|---|
| Example 19 | 79 | 61 | 0.23 | 2.6 | 148 |
| Example 20 | 53 | 66 | 0.17 | 2.8 | 150 |
| Example 21 | 85 | 59 | 0.15 | 3.4 | 155 |
| Example 22 | 75 | 68 | 0.14 | 3.2 | 156 |
| Example 23 | 48 | 74 | 0.24 | 2.3 | 153 |
| Example 24 | 59 | 74 | 0.65 | 2.0 | 155 |

Then, to each of the carbon fiber strands of Examples 19 to 24 containing the above sizing agent of component [B] was adhered the sizing agent (melting point: 70°C) of the component [A] used in Example 17, followed by drying. Then, the resulting carbon fiber strand was heated at 200°C for 1 minute, to obtain a carbon fiber strand of the present invention.

Examples 25 to 28 and Comparative Examples 8 to 9

The component [A] (melting point: 70°C) and the component [B] (melting point: 155°C), both used in Example 1 were mixed at a mass ratio of 1/9 to produce a suspension. The suspension was impregnated into a carbon fiber strand, followed by drying. The resulting carbon fiber strand was heated at 120 to 220°C as shown in Table 5, to obtain a carbon fiber strand of the present invention. The adhered amount of the component [A] and the component [B] was 1%.
Using this carbon fiber strand, the same fluff amount generated by fretting, as in Example 1 was measured. The results are shown in Table 5.

Table 5

| Example | Temperature of heating (°C) | Fluff amount generated by fretting (mg) |
|---|---|---|
| Comparative Example 8 | 120 | 32.4 |
| Comparative Example 9 | 140 | 28.0 |
| Example 25 | 160 | 11.1 |
| Example 26 | 180 | 10.2 |
| Example 27 | 200 | 9.1 |
| Example 28 | 220 | 10.5 |

**Claims**

1.  A carbon fiber strand for reinforcement of thermoplastic resin, wherein a sizing agent containing a resin composition obtained by mixing the following components [A] and [B]:

    [A] an acid-modified polyolefin copolymer having a weight-average molecular weight of 15,000 to 150,000, which has, as the main chain, at least one member selected from an ethylene-propylene copolymer, a propylene-butene copolymer and an ethylene-propylene-butene copolymer and in which the main chain has been modified with 0.1 to 20% by mass of an unsaturated carboxylic acid, and
    [B] an acid-modified polypropylene having a weight-average molecular weight of 3,000 to 150,000, which has, as the main chain, a polypropylene and in which the main chain has been modified with 0.1 to 20% by mass of an unsaturated carboxylic acid,
    at a mass ratio of 1:20 to 10:5, is adhered to 100 parts by mass of a carbon fiber in an amount of 0.1 to 8.0 parts by mass.

2.  A carbon fiber-reinforced thermoplastic resin obtained by adding, to a thermoplastic resin, a carbon fiber strand for reinforcement of thermoplastic resin, set forth in Claim 1, in an amount of 5 to 70% by mass.

3. The carbon fiber-reinforced thermoplastic resin according to Claim 2, wherein the thermoplastic resin is a polypropylene.

4. A method for producing a carbon fiber strand for reinforcement of thermoplastic resin, which comprises immersing a carbon fiber strand in an aqueous suspension containing a resin composition set forth in Claim 1 and then heating the resulting carbon fiber strand at a temperature at least equal to the melting point of the resin composition.

5. A method for producing a carbon fiber strand for reinforcement of thermoplastic resin, which comprises immersing a carbon fiber strand in either one of an aqueous suspension of [A] an acid-modified polyolefin copolymer and an aqueous suspension of [B] an acid-modified polypropylene, drying the resulting carbon fiber strand, immersing the dried carbon fiber strand in the other aqueous suspension, and then heating the carbon fiber strand after immersion in the two aqueous suspensions, at a temperature at least equal to the melting point of the resin composition.

6. A method for producing a carbon fiber strand for reinforcement of thermoplastic resin, which comprises immersing a carbon fiber strand in an aqueous suspension of [B] an acid-modified polypropylene, drying the resulting carbon fiber strand, heating the dried carbon fiber strand at a temperature at least equal to the melting point of the acid-modified polypropylene, immersing the resulting carbon fiber strand in an aqueous suspension of [A] an acid-modified polyolefin copolymer, drying the resulting carbon fiber strand, and then heating the dried carbon fiber strand at a temperature which is at least equal to the melting point of the acid-modified polyolefin copolymer but lower than the melting point of the acid-modified polypropylene [B].

7. A method for producing a carbon fiber strand for reinforcement of thermoplastic resin, set forth in any one of Claims 4 to 6, wherein the acid-modified polypropylene [B] has the following properties:

(1) a crystallinity of 50 to 80% as measured by IR spectrometry,
(2) an intrinsic viscosity [$\eta$] of 0.05 to 0.7 dl/g,
(3) an acid value of 40 to 100 mg-KOH/g, and
(4) a mass reduction of less than 5% when subjected, by a thermobalance, to temperature elevation from 23°C to 250°C at a rate of 10°C/min in the air.

Fig. 1

Fig. 2

Fig. 3

**INTERNATIONAL SEARCH REPORT**

| International application No. |
| --- |
| PCT/JP2006/306770 |

A. CLASSIFICATION OF SUBJECT MATTER
*B29B15/08*(2006.01), *C08L23/26*(2006.01), *D06M15/227*(2006.01), *C08J5/06*
(2006.01), *D06M101/40*(2006.01), *B29K105/08*(2006.01)

According to International Patent Classification (IPC) or to both national classification and IPC

B. FIELDS SEARCHED

Minimum documentation searched (classification system followed by classification symbols)
B29B15/08-15/14, C08J5/06-5/08, C08L23/26-23/36, D06M15/227-15/233,
D06M101/40

Documentation searched other than minimum documentation to the extent that such documents are included in the fields searched
Jitsuyo Shinan Koho        1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2004-263359 A  (Mitsubishi Rayon Co., Ltd.), 24 September, 2004 (24.09.04), Claims (Family: none) | 1-7 |
| A | JP 2005-048342 A  (Mitsubishi Rayon Co., Ltd.), 24 February, 2005 (24.02.05), Claims & JP 2005-048343 A       & JP 2005-048344 A & WO 2005/012604 A2 | 1-7 |
| A | JP 2003-277525 A  (Idemitsu Petrochemical Co., Ltd.), 02 October, 2003 (02.10.03), Claims (Family: none) | 1-7 |

☒  Further documents are listed in the continuation of Box C.          ☐  See patent family annex.

| | |
| --- | --- |
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    22 May, 2006 (22.05.06) | Date of mailing of the international search report<br>    30 May, 2006 (30.05.06) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/306770 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 06-107442 A  (Sanyo Chemical Industries, Ltd.), 19 April, 1994 (19.04.94), Claims (Family: none) | 1-7 |
| A | JP 03-181528 A  (Polyplastics Co., Ltd.), 07 August, 1991 (07.08.91), Claims & KR 9311365 B | 1-7 |
| P,A | JP 2005-256206 A  (Teijin Techno Products Kabushiki Kaisha), 22 September, 2005 (22.09.05), Claims (Family: none) | 1-7 |
| P,A | JP 2006-077334 A  (Teijin Techno Products Kabushiki Kaisha), 23 March, 2006 (23.03.06), Claims (Family: none) | 1-7 |
| E,A | JP 2006-124847 A  (Toho Tenakkusu Kabushiki Kaisha), 18 May, 2006 (18.05.06), Claims (Family: none) | 1-7 |

Form PCT/ISA/210 (continuation of second sheet) (April 2005)

**INTERNATIONAL SEARCH REPORT**

International application No.

PCT/JP2006/306770

In claims 5 and 6, [A] and [B] are not defined and, therefore, the inventions are unclear. Thus, the search was conducted exclusively on the parts in accordance with claim 1 based on the assumption that these claims depend on claim 1.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005048344 A
- JP 2084566 A

- JP 3181528 A